(19) Europäisches Patentamt
European Patent Office
Office européen des brevets

(11) Veröffentlichungsnummer: **0 457 141 A2**

# (12) EUROPÄISCHE PATENTANMELDUNG

(21) Anmeldenummer: **91107257.7**

(22) Anmeldetag: **04.05.91**

(51) Int. Cl.5: **C09B 62/255**, D06P 1/382

(30) Priorität: **18.05.90 DE 4016058**

(43) Veröffentlichungstag der Anmeldung:
**21.11.91 Patentblatt 91/47**

(84) Benannte Vertragsstaaten:
**CH DE FR GB LI**

(71) Anmelder: **BAYER AG**
**W-5090 Leverkusen 1 Bayerwerk(DE)**

(72) Erfinder: **Kunde, Klaus, Dr.**
**Moltkestrasse 5**
**W-5206 Neunkirchen 1(DE)**
Erfinder: **Henk, Hermann, Dr.**
**Roggendorfstrasse 55**
**W-5000 Koeln 80(DE)**
Erfinder: **Schündehütte, Karl-Heinz, Prof. Dr.**
**Klief 75**
**W-5090 Leverkusen(DE)**
Erfinder: **Stöhr, Frank-Michael, Dr.**
**Am Thelen Siefen 10**
**W-5068 Odenthal(DE)**

(54) **Reaktivfarbstoffe.**

(57) Die neuen Reaktivfarbstoffe der Formel

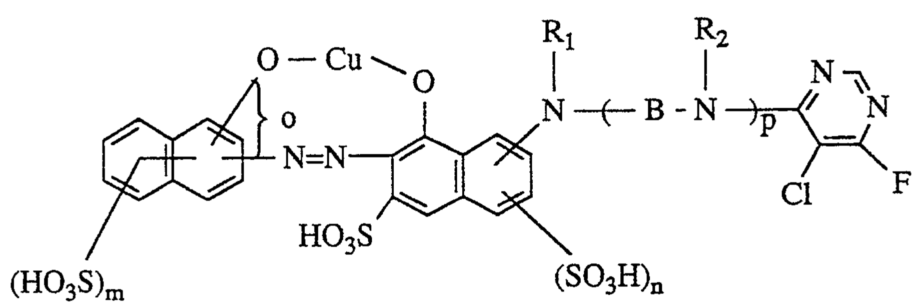

in welcher die Substituenten und Indices die in der Bescheibung angegebene Bedeutung haben, eignen sich hervorragend zum Färben oder Bedrucken von natürlichen oder synthetischen, hydroxyl- oder amidgruppenhaltigen Materialien.

EP 0 457 141 A2

Gegenstand der Erfindung sind neue Reaktivfarbstoffe der Formel,

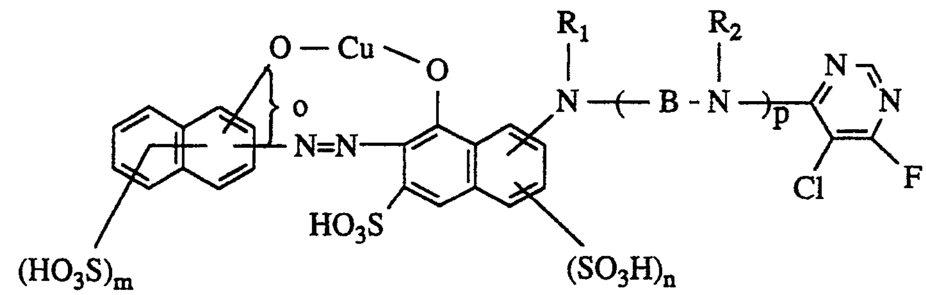

(I)

in welcher

B für

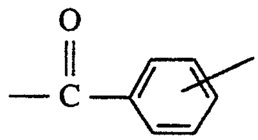

steht,

$R_1$ und $R_2$ unabhängig voneinander jeweils für Wasserstoff, $C_1$-$C_4$-Alkyl oder $C_2$-$C_4$-Hydroxyalkyl stehen,

m für 1,2 oder 3 steht,

n für 0 oder 1 steht und

p für 0 der 1 steht, mit der Maßgabe, daß

p für 1 steht, wenn n für 1 steht und gleichzeitig die Substituenten

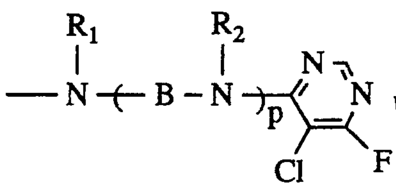 und $-(SO_3H)_n$

in ortho-Stellung zueinander stehen,

Verfahren zu ihrer Herstellung und ihre Verwendung zum Färben oder Bedrucken von hydroxyl- oder amidgruppenhaltigen Materialien.

Bevorzugt sind Farbstoffe der Formel (I), in welcher
$R_1$ und $R_2$ unabhängig voneinander jeweils für Wasserstoff, Methyl oder 2-Hydroxyethyl stehen und
B, m, n und p die oben angegebene Bedeutung haben.

Besonders bevorzugt sind die Farbstoffe der Formeln

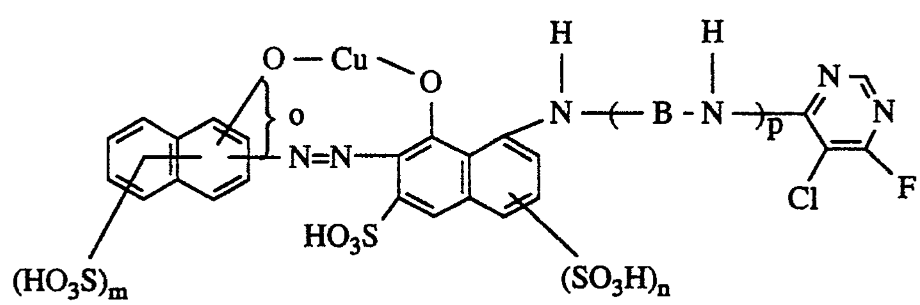

(II),

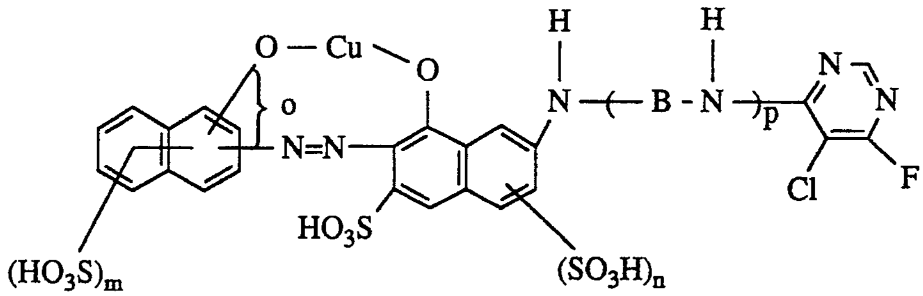

(III)

und

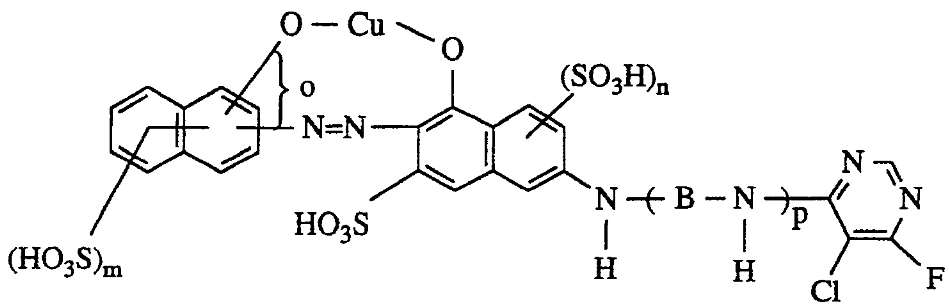

(IV),

in welchen
B, m, n und p die oben angegebene Bedeutung haben.

Von besonderem Interesse sind die Farbstoffe der Formeln

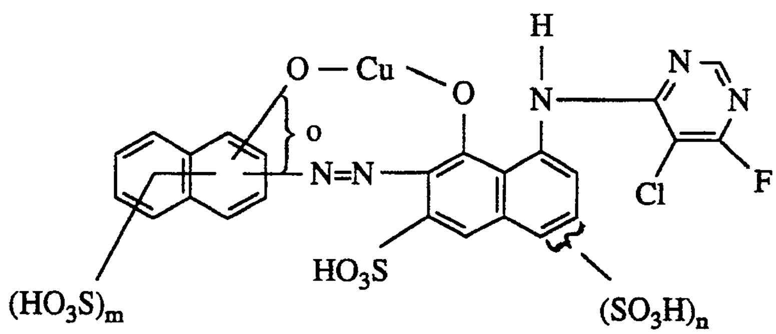

(V),

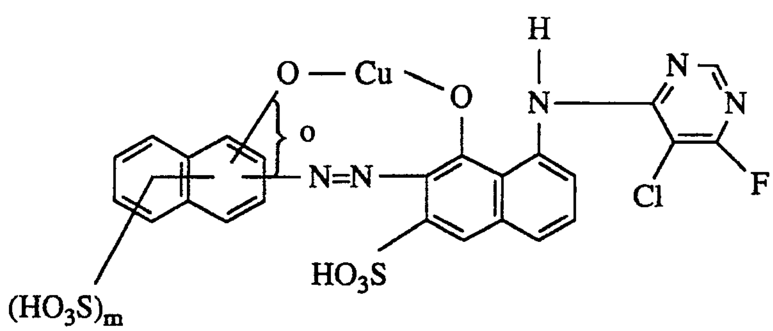

(VI)

und

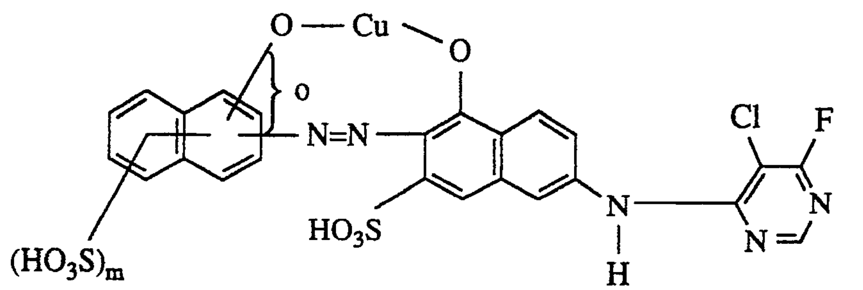

(VII),

in welchen
m und n die oben angegebene Bedeutung haben.

Die neuen Farbstoffe der Formel (I) können hergestellt werden, indem man entweder

a) Verbindungen der Formel

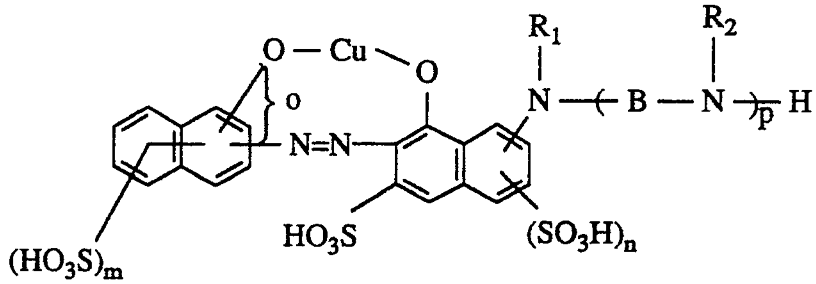

(VIII),

in welcher
B, $R_1$, $R_2$, m, n und p die oben angegebene Bedeutung haben, mit der Maßgabe, daß
p für 1 steht, wenn n für 1 steht
und gleichzeitig die Substituenten

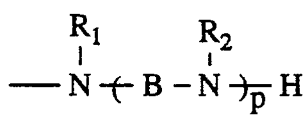

und

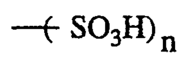

in ortho-Stellung zueinander stehen,
mit 5-Chlor-4,6-difluorpyrimidin umsetzt, oder

b) Verbindungen der Formel

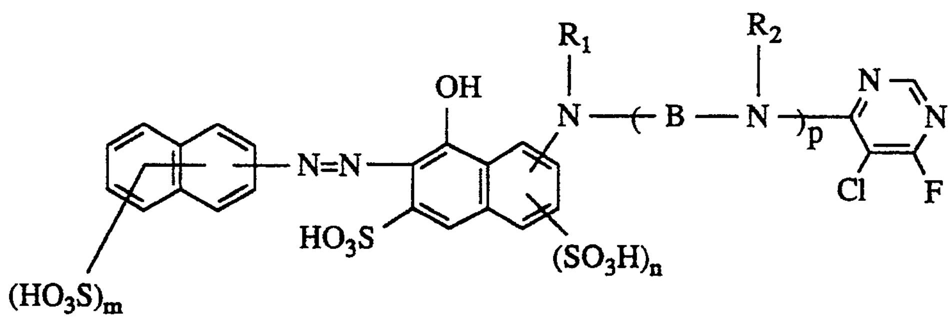

(IX),

in welcher
B, $R_1$, $R_2$, m, n und p die oben angegebene Bedeutung haben, mit der Maßgabe, daß
p für 1 steht, wenn n für 1 steht
und die Substituenten

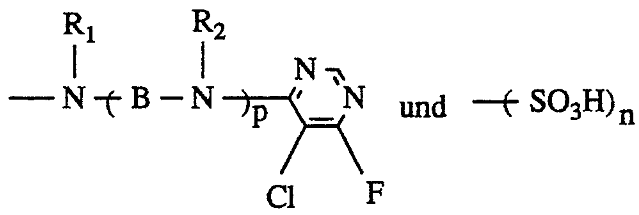

in ortho-Stellung zueinander stehen, mit Kupfersalzen und Oxidationsmitteln behandelt.

Die Verbindungen der Formel (VIII) erhält man, indem man entweder

b) o-Aminonaphtholsulfonsäuren der Formel

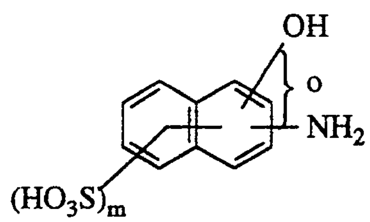

(X),

in welcher

m die oben angegebene Bedeutung hat,

diazotiert und mit Aminonaphtholsulfonsäuren der Formel

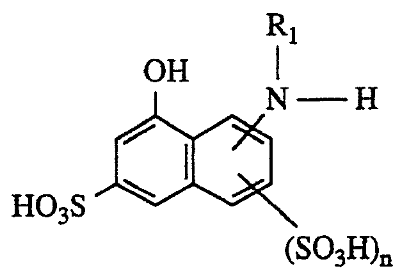

(XI),

in welcher

$R_1$ und n die oben angegebene Bedeutung haben,

kuppelt und die Kupplungsprodukte in die Kupfer-(II)-Komplexe überführt, gegebenenfalls nachdem man sie in die entsprechenden N-Aminobenzoyl-Derivate umgewandelt hat, beispielsweise durch Umsetzung mit m- oder p-Nitrobenzoylchlorid, und anschließender Reduktion der Nitrogruppe mit Natriumsulfid oder durch Umsetzung mit Isatosäureanhydrid, oder indem man

c) Aminonaphthalinsulfonsäuren der Formel

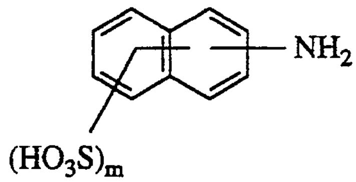

(XII),

in welcher

m die oben angegebene Bedeutung hat,

diazotiert und mit Aminonaphtholsäuren der Formel (XI) oder deren N-Aminobenzoyl-Derivaten zu Verbindungen der Formel

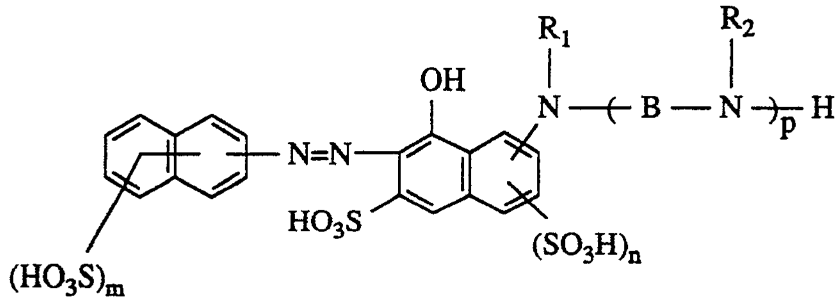

(XIII),

in welcher
B, $R_1$, $R_2$, m, n und p die oben angegebene Bedeutung haben, mit der Maßgabe, daß p für 1 steht, wenn n für 1 steht
und gleichzeitig die Substituenten

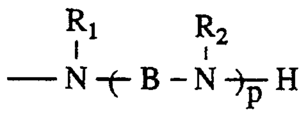

und $-(SO_3H)_n$

in ortho-Stellung zueinander stehen,
umsetzt, und diese in an sich bekannter Weise mit Kupfersalzen und Oxidationsmitteln, beispielsweise mit Kupfer-(II)-sulfat oder Kupfer-(II)-acetat und Wasserstoffperoxid in die Kupfer-(II)-Komplexe überführt.

Dabei kann es vorteilhaft sein, die Aminogruppen $-NHR_1$ bzw. $-NHR_2$ durch Acylierung mit z.B. Acetanhydrid, Acetylchlorid oder Maleinsäureanhydrid zunächst in die entsprechenden Amide zu überführen; die Acylreste werden dann nach der Umsetzung mit den Kupfersalzen und Oxidationsmitteln gegebenenfalls selektiv hydrolytisch wieder abgespalten.

Beispiele für o-Aminonaphtholsulfonsäuren der Formel (X) sind: 4-Amino-3-hydroxy-1-naphthalinsulfonsäure,
3-Amino-4-hydroxy-1-naphthalinsulfonsäure,
5-Amino-6-hydroxy-2-naphthalinsulfonsäure,
8-Amino-7-hydroxy-2-naphthalinsulfonsäure,
6-Amino-7-hydroxy-2-naphthalinsulfonsäure,
7-Amino-6-hydroxy-1,3-naphthalindisulfonsäure,
4-Amino-3-hydroxy-1,7-naphthalindisulfonsäure,
3-Amino-4-hydroxy-1,7-naphthalindisulfonsäure.

Beispiele für Aminonaphtholsulfonsäuren der Formel (XI) sind:
7-Amino-4-hydroxy-naphthalin-2-sulfonsäure (I-Säure),
N-Methyl-I-Säure, N-(2-Hydroxyethyl)-I-Säure,
6-Amin-4-hydroxy-naphthalin-2-sulfonsäure (Gammasäure),
N-Methylgammasäure, N-(2-Hydroxyethyl)-gammasäure,
6-Amino-4-hydroxy-naphthalin-2,7-disulfonsäure (RR-Säure),
N-Methyl-RR-Säure,
5-Amino-4-hydroxy-naphthalin-2,7-disulfonsäure (H-Säure),
4-Amino-5-hydroxy-naphthalin-1,7-disulfonsäure (K-Säure),
3-Amino-8-hydroxy-1,6-naphthalindisulfonsäure,
8-Amino-4-hydroxy-naphthalin-2-sulfonsäure (M-Säure),
2-Amino-5-hydroxy-1,7-naphthalindisulfonsäure,
5-Amino-4-hydroxy-2-naphthalinsulfonsäure.

Beispiele für Aminonaphthalinsulfonsäuren der Formel (XII) sind:
5-,6- oder 7-Amino-1-naphthalinsulfonsäure,
4-,5-,6-,7- oder 8-Amino-2-naphthalinsulfonsäure,
3- oder 4-Amino-1,5-naphthalindisulfonsäure,
5-,6- oder 7-Amino-1,3-naphthalindisulfonsäure,
4-Amino-1,6- oder -1,7-naphthalindisulfonsäure,
7- oder 8-Amino-1,3,5-naphthalintrisulfonsäure.

Die Verbindungen der allgemeinen Formel (IX) erhält man, indem man Verbindungen der allgeminen Formel (XIII) mit 5-Chlor-4,6-difluorpyrimidin umsetzt.

Die Umsetzung mit 5-Chlor-4,6-difluorpyrimidin erfolgt in wäßrigem Medium bei Temperaturen zwischen 20 und 100° C und bei pH-Werten zwischen 4 und 10.

Die Reaktivfarbstoffe der Formel (I) können isoliert und zu trockenen Färbepräparationen verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d.h. ohne Zwischenisolierung der Farbstoffe, herstellen.

Die Reaktivfarbstoffe der Formel (I) zeichnen sich durch hohe Reaktivität aus und sie ergeben Färbungen mit guten Naß- und Lichtechtheiten. Besonders hervorzuheben ist es, daß die Farbstoffe eine gute Löslichkeit und Elektrolytlöslichkeit bei guten Ausziehеigenschaften und hoher Farbstoff-Fixierung aufweisen, und daß sich die nicht fixierten Anteile leicht entfernen lassen.

Die Reaktivfarbstoffe der Formel (I) eignen sich zum Färben und Bedrucken der verschiedenen beispielsweise Hydroxylgruppen oder Amidgruppen enthaltenden Substrate, wie Seide, Leder, Wolle, Superpolyamidfasern und Superpolyamidurethanen, insbesondere aber cellulosehaltiger Materialien faseriger struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird und die Farbstoffe nach einer Alkalibehandlung oder in Gegenwart von Alkali gegebenenfalls unter Wärmeeinwirkung fixiert werden. Sie eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile Fordernden Mittels zu unterwerfen.

Die angegebenen Formeln sind die der freien Säuren. Bei der Herstellung werden im allgemeinen die Salze erhalten, insbesondere die Alkalisalze wie Natrium-, Kalium- oder Lithiumsalze. Die Farstoffe können aber auch als konzentrierte Lösungen eingesetzt werden.

Beispiel 1

31,9 g H-Säure werden mit Soda-Lösung bei pH 8 in 500 ml Wasser gelöst und auf 40° C erwärmt. Man gibt 18 g 5-Chlor-4,6-difluorpyrimidin zu und rührt bei dieser Temperatur, bis die Kondensation beendet ist, wobei der pH-Wert mit Soda-Lösung konstant gehalten wird. 30,3 g 3-Amino-1,5-naphthalindisulfonsäure werden bei 20° C in 500 ml Wasser gelöst. Man gibt 100 g Eis und 30 ml konz. Salzsäure zu und diazotiert mit 6,9 g Natriumnitrit. Die Suspension der Diazoniumverbindung läßt man zur auf 10° C gekühlten Lösung des Kondensationsproduktes zutropfen, wobei der pH-Wert mit Soda-Lösung konstant gehalten wird. Das Kupplungsprodukt wird durch Zugabe von 250 g Salz ausgefällt, isoliert und bei pH 6 und 40° C in 1000 ml Wasser gelöst. Man gibt 25 g Kupfer-(II)-sulfat•$5H_2O$ zu und tropft langsam 70 ml 10 %ige Wasserstoffperoxid-Lösung ein, wobei man den pH-Wert mit Soda-Lösung auf 6 hält. Nach Beendigung der Komplexbildung wird der Farbstoff durch Zugabe von 200 g Salz ausgefällt, isoliert und getrocknet. Er färbt Baumwolle blau.

Beispiele 2 bis 7

Verwendet man statt der in Beispiel 1 eingesetzten Kupplungskomponente äquimolare Mengen der Kondensationsprodukte aus 5-Chlor-4,6-difluorpyrimidin und K-Säure, I-Säure, Gammasäure, M-Säure, 3-Amino-8-hydroxy-1,6-naphthalindisulfonsäure oder 5-Amino-4-hydroxy-2-naphthalinsulfonsäure, so erhält man ebenfalls Reaktivfarbstoffe, die Baumwolle blau färben.

Beispiele 8 bis 13

Verwendet man statt der in Beispiel 1 eingesetzten Diazokomponente äquimolare Mengen von 6-Amino-1,3-naphthalindisulfonsäure,
7-Amino-1,3-naphthalindisulfonsäure,

4-Amino-1,6-naphthalindisulfonsäure,
4-Amino-1,7-naphthalindisulfonsäure,
7-Amino-1,3,5-naphthalintrisulfonsäure oder
6-Amino-2-naphthalinsulfonsäure,
so erhält man ebenfalls Reaktivfarbstoffe, die Baumwolle blau färben.

Man erhält ebenfalls blaue Reaktivfarbstoffe, wenn man statt H-Säure die in den Beispielen 2 bis 7 eingesetzten Aminonaphtholsulfonsäuren verwendet.

Beispiel 14

25 g Diazoamidolsäure (Diazoniumverbindung aus 4-Amino-3-hydroxy-1-naphthalinsulfonsäure) werden in 200 ml Wasser mit 4 g Natriumhydroxid bei 20°C gelöst. Man gibt 9 g Zinksulfat•$H_2O$ und 15 ml konz. Ammoniak-Lösung zu und versetzt dann mit einer neutralen Lösung von 31,9 g H-Säure in 500 ml Wasser. Bis zum Ende der Kupplung wird der pH-Wert mit verd. Natronlauge bei 7 bis 7,5 gehalten. Man erwärmt auf 40°C und gibt 18 g 5-Chlor-4,6-difluorpyrimidin zu. Die Kondensation wird bei pH 9 zu Ende geführt. Der Farbstoff wird durch Zugabe von 140 g Salz ausgefällt, isoliert und getrocknet. Man erhält damit auf Baumwolle blaue Drucke.

Beispiele 15 bis 19

Verwendet man statt der in Beispiel 14 eingesetzten Kupplungskomponente äquimolare Mengen K-Säure, I-Säure, 3-Amino-8-hydroxy-naphthalin-1,6-disulfonsäure (W-Säure), M-Säure oder 5-Amino-4-hydroxy-2-naphthalinsulfonsäure, so erhält man ebenfalls Reaktivfarbsotffe, die auf Baumwolle blaue Drucke ergeben.

Beispiele 20 bis 22

Verwendet man statt der in Beispiel 14 eingesetzten Diazokomponente äquimolare Mengen
4-Antino-3-hydroxy-1,7-naphthalindisulfonsäure,
3-Amino-4-hydroxy-1-naphthalinsulfonsäure oder
3-Amino-4-hydroxy-1,7-naphthalindisulfonsäure,
so erhält man ebenfalls Reaktivfarbstoffe, die auf Baumwolle blaue Drucke ergeben.

Beispiel 23

43,8 g N-(4-Aminobenzoyl)-H-Säure werden mit Soda-Lösung bei pH 7 in 500 ml Wasser gelöst und auf 40°C erwärmt. Man gibt 18 g 5-Chlor-4,6-difluorpyrimidin zu und rührt bei dieser Temperatur, bis die Kondensation beendet ist, wobei der pH-Wert mit Soda-Lösung konstant gehalten wird. 30,3 g 3-Amino-1,5-naphthalindisulfonsäure werden bei 20°C in 500 ml Wasser gelöst. Man gibt 100 g Eis und 30 ml konzentrierte Salzsäure zu und diazotiert mit 6,9 g Natriumnitrit. Die Suspension der Diazoniumverbindung läßt man zur auf 10°C gekühlten Lösung des Kondensationsproduktes zutropfen, wobei der pH-Wert mit Soda-Lösung konstant gehalten wird. Das Kupplungsprodukt wird durch Zugabe von 250 g Salz ausgefällt, isoliert und bei pH 6 und 40°C in 1000 ml Wasser gelöst. Man gibt 25 g Kupfer-(II)-sulfat•$5H_2O$ zu und tropft langsam 70 ml 10 %ige Wasserstoffperoxid-Lösung ein, wobei man den pH-Wert mit Soda-Lösung auf 6 hält. Nach Beendigung der Komplexbildung wird der Farbstoff durch Zugabe von 200 g Salz ausgefällt, isoliert und getrocknet. Er färbt Baumwolle blau.

Beispiele 24 bis 30

Verwendet man statt der in Beispiel 23 eingesetzten Kupplungskomponente äquimolare Mengen der Kondensationsprodukte von 5-Chlor-4,6-difluorpyrimidin mit den N-(4-Aminobenzoyl)-derivaten von K-Säure, W-Säure, RR-Säure, 2-Amino-5-hydroxy-1,7-naphthalindisulfonsäure, I-Säure, Gammasäure oder 5-Amino-4-hydroxy-2-naphthalinsulfonsäure, so erhält man ebenfalls Reaktivfarbstoffe, die Baumwolle blau färben.

Beispiele 31 bis 36

Verwendet man statt der in Beispiel 23 eingesetzten Diazokomponente äquimolare Mengen von
6-Amino-1,3-naphthalin-disulfonsäure,

7-Amino-1,3-naphthalindisulfonsäure,
4-Amino-1,6-naphthalindisulfonsäure,
4-Amino-1,7-naphthalindisulfonsäure,
7-Amino-1,3,5-naphthalintrisulfonsäure oder
6-Amino-2-naphthalinsulfonsäure,
so erhält man ebenfalls Reaktivfarbstoffe, die Baumwolle blau färben.

Man erhält ebenfalls blaue Reaktivfarbstoffe, wenn man statt H-Säure die in den Beispielen 2 bis 7 eingesetzten Aminonaphtholsulfonsäuren verwendet.

## Patentansprüche

1. Reaktivfarbstoffe der Formel

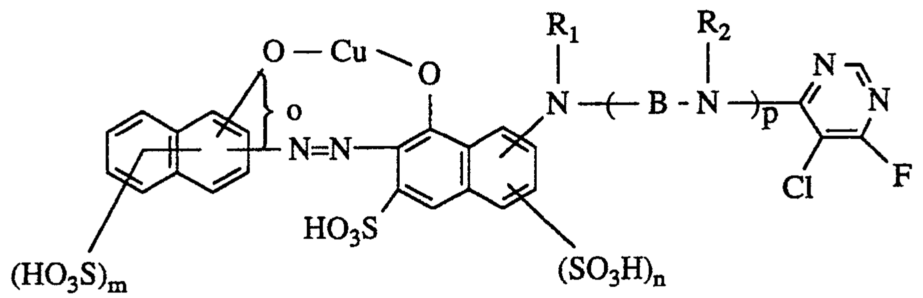

(I)

in welcher

B für

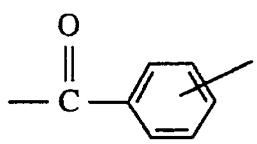

steht,

| | |
|---|---|
| $R_1$ und $R_2$ | unabhängig voneinander jeweils für Wasserstoff, $C_1$-$C_4$-Alkyl oder $C_2$-$C_4$-Hydroxyalkyl stehen, |
| m | für 1,2 oder 3 steht, |
| n | für 0 oder 1 steht und |
| p | für 0 oder 1 steht, mit der Maßgabe, daß |
| p | für 1 steht, wenn n für 1 steht und gleichzeitig die Substituenten |

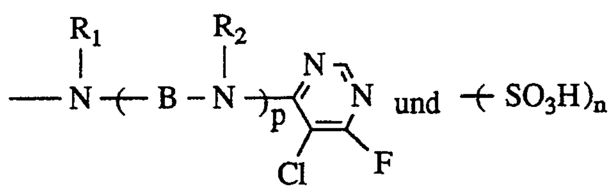

in ortho-Stellung zueinander stehen.

2. Farbstoffe des Anspruchs 1, in welchen $R_1$ und $R_2$ unabhängig voneinander für Wasserstoff, Methyl oder 2-Hydroxyethyl stehen.

3. Farbstoffe der Ansprüche 1 und 2 der Formel

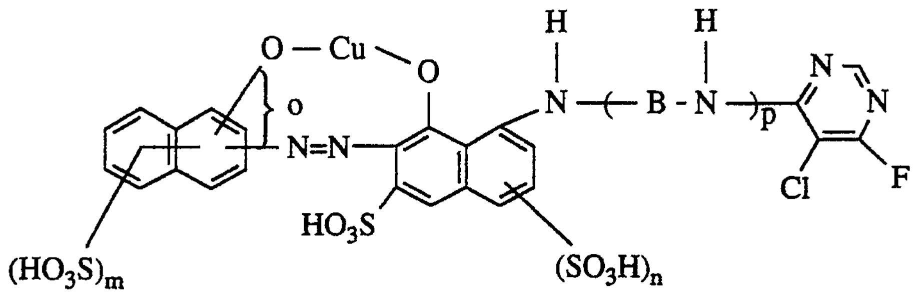

(II),

worin
B, m, n und p die in Anspruch 1 angegebene Bedeutung haben.

4. Farbstoffe der Ansprüche 1 und 2 der Formel

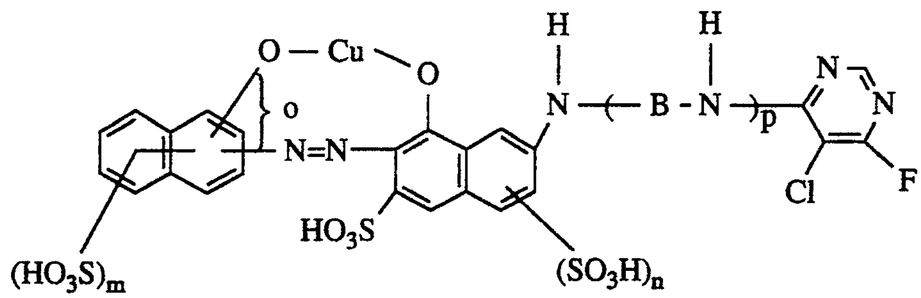

(III)

worin
B, m, n und p die in Anspruch 1 angegebene Bedeutung haben.

5. Farbstoffe der Ansprüche 1 und 2 der Formel

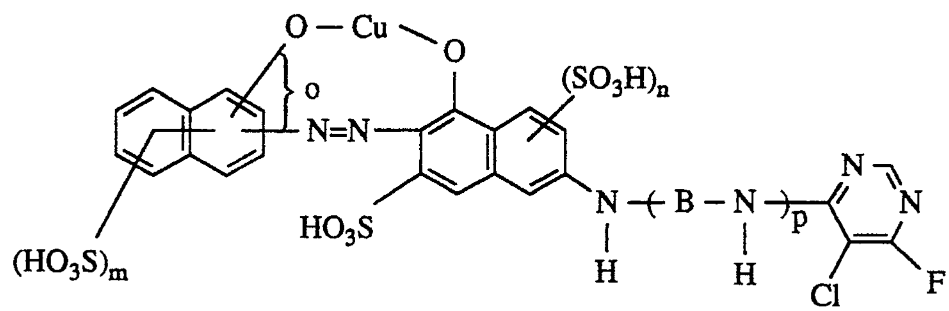

(IV),

worin
B, m, n und p die in Anspruch 1 angegebene Bedeutung haben.

6. Farbstoffe der Ansprüche 1 bis 3 der Formel

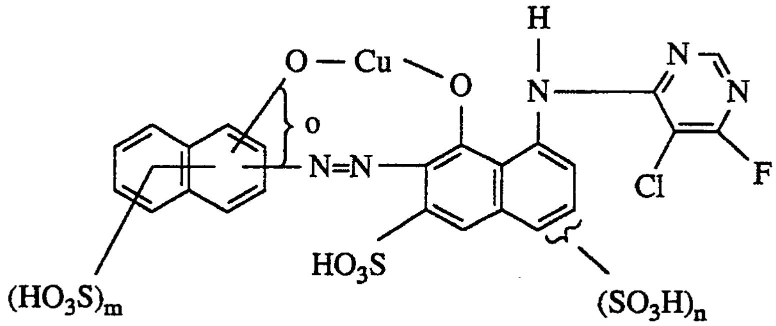

(V),

worin
m und n die in Anspruch 1 angegebene Bedeutung haben.

**7.** Farbstoffe der Ansprüche 1 bis 3 der Formel

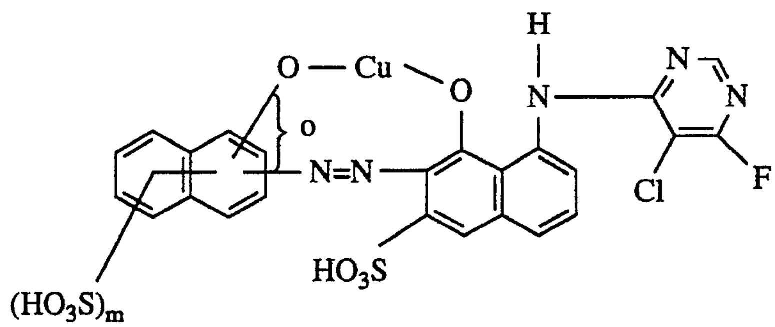

(VI),

worin
m die in Anspruch 1 angegebene Bedeutung hat.

**8.** Farbstoffe der Ansprüche 1, 2 und 5 der Formel

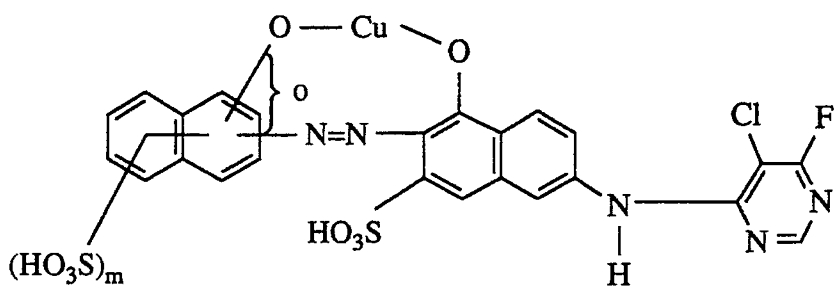

(VII),

worin
m die in Anspruch 1 angegebene Bedeutung hat.

**9.** Verwendung der Farbstoffe der Ansprüche 1 bis 8 zum Färben oder Bedrucken von hydroxyl- oder amidgruppenhaltigen, natürlichen oder synthetischen Materialien.

**10.** Mit Farbstoffen der Ansprüche 1 bis 8 gefärbte natürliche oder synthetische, hydroxyl- oder amidgruppenhaltige Materialien.